# EUROPEAN PATENT APPLICATION

(11) **EP 1 923 550 A2**
(43) Date of publication of application: **21.05.2008**
(21) Application number: 07120237.8
(22) Date of filing: 08.11.2007
(51) Int. Cl.: F02B 29/04

(54) **Bypass assembly for a charge-air cooler**

(30) Priority: 14.11.2006 GB 0622555
(71) Applicant: Delphi Technologies, Inc., Troy, Michigan 48007 (US)
(72) Inventor: Simion, Hugues, 57710 Aumetz (FR)
(74) Representative: Robert, Vincent

(57) **Abstract**

Bypass assembly for a charge air cooler comprising a body having a first gas inlet passageway having an inlet for communication with a charge air outlet of a turbocharger, a first gas outlet passageway having an outlet for communication with an inlet of a charge air cooler, and a second gas outlet passageway having an outlet for communication with an inlet manifold of the engine, a valve means being mounted within the body, characterized in that said valve means is mounted at an intersection of said first gas inlet passageway, said second gas outlet passageway and said gas outlet passageway, said valve means having a first configuration, enabling gas flow between said first gas inlet passageway and said first gas outlet passageway, and a second configuration enabling gas flow between said first gas inlet passageway and said second gas outlet passageway, actuator means being provided for moving said valve means between its first and second configurations.

## Description

### Technical Field

The present invention relates to a bypass assembly for a charge air cooler of an internal combustion engine.

### Background of the Invention

The amount of air which can be supplied to an internal combustion engine in a vehicle depends on the pressure of the air but also on the temperature of the air. While performance gains can be obtained by compressing air downstream of the intake manifold of an engine using a turbocharger or a supercharger, supplying the largest possible amount of air to an internal combustion engine entails cooling the compressed air in a charge air cooler downstream of the compressor of the turbocharger or supercharger before it is led to the combustion chamber of the engine. Therefore a charge air cooler is typically provided downstream of the turbocharger or compressor, usually situated in front of the conventional radiator in a vehicle to enable heat exchange between the compressed charge air and a flow of ambient air through the cooler to cool the compressed air.

Diesel engines are frequently fitted with particulate filters in the exhaust system thereof due to the demands of emission legislation. Such filters are usually mounted in the exhaust system downstream of a catalytic device such as an oxidation catalyst and other exhaust components, such as a turbocharger.

In order to avoid blockage of the particulate filter by accumulated soot, leading to an increase in exhaust backpressure, and ultimately a breakdown of the filter, particulate filters require periodic regeneration. During regeneration the temperature of the filter is increased so that the accumulated soot is burnt off, thereby ensuring both acceptable back pressure levels and the avoidance of filter overload.

This periodic regeneration process requires the temperature of the particulate filter to be greatly elevated. The temperature of the particulate filter must be raised to around 600°C in order to burn off the soot, compared to a normal exhaust operating temperature of 150°C.

One way to increase the temperature of the particulate filter to achieve regeneration of the filter is to increase the temperature of the exhaust gases leaving the combustion chamber(s) of the engine. This can be achieved by increasing the temperature of the charge air entering the combustion chamber(s) by passing charge air directly from the compressor of the turbocharger or super charger to the inlet manifold, bypassing the charge air cooler. In order to achieve such selective bypass of the charge air cooler, it is known to provide valve arrangements for closing the inlet passage of the charge air cooler and opening a bypass passage between the compressor and the inlet manifold. Such known arrangements include multiple valve and multiple valve actuators, leading to increased cost and complexity.

### Summary of the Invention

According to the present invention there is provided a bypass assembly for a charge air cooler of an internal combustion engine comprising a body having a first gas inlet passageway having an inlet for communication with a charge air outlet of a turbocharger or supercharger, a first gas outlet passageway having an outlet for communication with an inlet of a charge air cooler, and a second gas outlet passageway having an outlet for communication with an inlet manifold of the engine, a valve means being mounted within the body at an intersection of said first gas inlet passageway, said first gas outlet passageway and said second gas outlet passageway, said valve means having a first configuration, enabling gas flow between said first gas inlet passageway and said first gas outlet passageway and preventing communication between said first gas inlet passageway and said second gas outlet passageway, and a second configuration enabling gas flow between said first gas inlet passageway and said second gas outlet passageway and preventing communication between said first gas inlet passageway and said first gas outlet passageway, actuator means being provided for moving said valve means between its first and second configurations.

Preferably the body further comprises a second gas inlet passageway having an inlet for communication with an outlet of a charge air cooler, said second gas inlet passageway communicating with said second gas outlet passageway.

In one embodiment the valve means comprises a valve member pivotally mounted in a passage section located between the first gas outlet passageway and the second gas outlet passageway, the valve member having a pivot axis arranged normal to the longitudinal axis of said passage section such that peripheral edge regions of the valve member are engageable against respective inner surfaces of the passage section when in its first and second configurations, said first gas inlet passageway intersecting said passage section in a direction substantially normal to the pivot axis of the valve member and at a location between said respective inner surfaces of the cylindrical region cooperating with said valve member when in its respective first and second configuration. Preferably said first gas inlet passageway, at least in the region of the valve means, extends perpendicular to said passage section.

Preferably said passage section is substantially cylindrical and said valve member comprises a substantially circular flap having a central diametrically extending pivot axis extending radially through a centre of the passage section.

### Brief Description of the Drawings

An embodiment of the present invention will now be described by way of example only with reference to the accompanying drawings, in which:
Fig. 1 is a part sectional perspective view of a known bypass assembly.
Fig. 2 is a part sectional perspective view of a bypass assembly according to an embodiment of the present invention.

### Description of the preferred embodiment

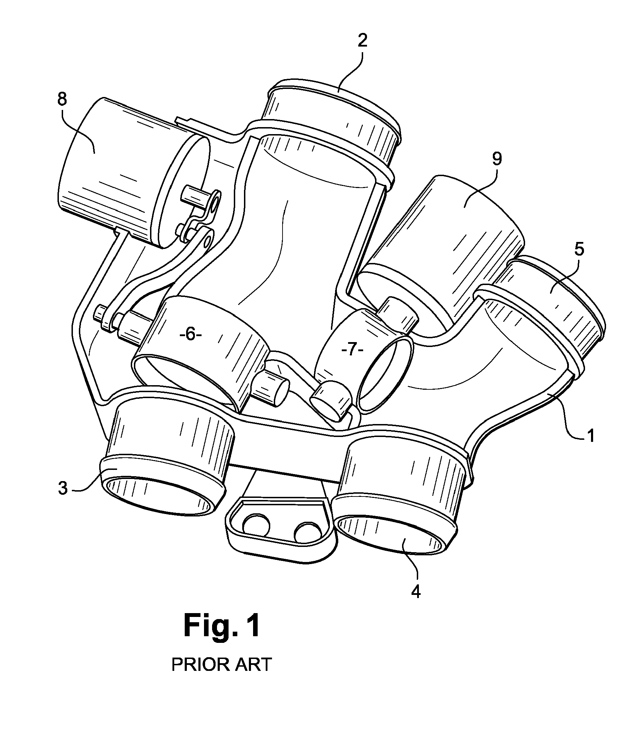

A known charge air cooler bypass assembly for a turbocharged diesel engined vehicle is illustrated in Fig.1. The assembly comprises a manifold 1 having a first gas inlet 2 for connection to an outlet passage of a turbocharger, a first gas outlet 3 for connection to a delivery pipe of the charge air cooler, a second gas inlet 4 for connection to a return pipe from the charge air cooler and a second gas outlet 5 for connection to an intake pipe of the engine. A first valve 6, typically comprising a butterfly valve, is located in the manifold between the first gas inlet 2 and the first gas outlet 3 and a second valve 7, again typically comprising a butterfly valve, is located in a bypass passage between the first gas inlet 2 and the second gas outlet 4. A first rotary actuator 8, such as an electric motor, is provided for actuating the first valve 6 and a second rotary actuator 9 is provided for actuating the second valve 7.

During normal engine operation the first valve 6 is open and the second valve 7 is closed so that charge air passes through the manifold 1 from the compressor of the turbocharger via the first gas inlet 2 and the first has outlet 3 and through the charge air cooler wherein it is cooled before passing back through the manifold 1 and into the air intake of the engine via the second gas inlet 4 and the second gas outlet 5. When it is desired to regenerate the particulate filter contained in the exhaust system of the vehicle, the first valve 6 is closed and the second valve 7 is opened so that the charge air passes directly from the turbocharger to the engine via the first gas inlet 2, the bypass passage and the second gas outlet 5, bypassing the charge air cooler, therefore increasing the temperature of the charge air and thus the temperature of the exhaust gases exiting the combustion chambers of the engine.

As can be seen from Fig. 1, the requirement for two separate valve and two separate actuators increases the size of the bypass assembly. Furthermore, the use of two separate actuators requires complex control systems to synchronise the operation of the two valves.

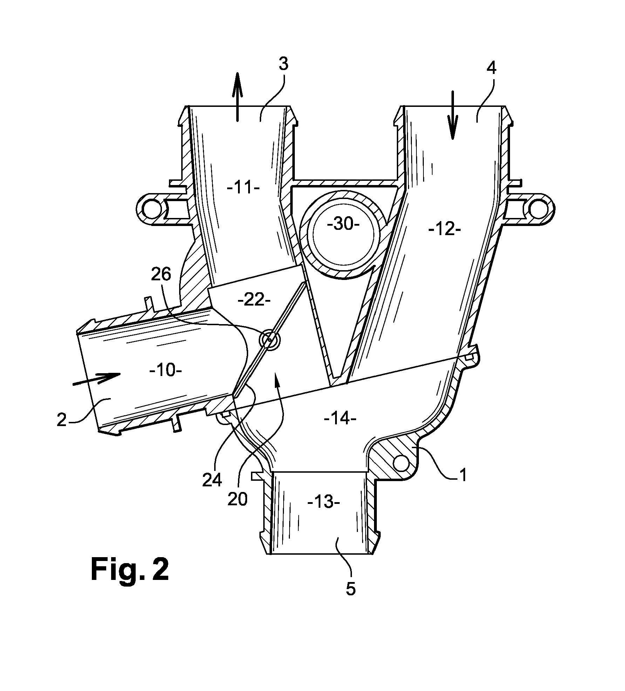

An embodiment of the present invention is shown in Fig. 2. Like reference numerals are used for like parts to aid understanding. The improved bypass assembly comprises a manifold 1 having a first gas inlet 2 for connection to an outlet passage of a turbocharger, a first gas outlet 3 for connection to a delivery pipe of the charge air cooler, a second gas inlet 4 for connection to a return pipe from the charge air cooler and a second gas outlet 5 for connection to an intake pipe of the engine.

The first gas inlet 2 is provided at an outer end of a first passageway 10. The first gas outlet 3 is provided at an outer end of a second passageway 11. The second gas inlet 4 is provided at an outer end of a third passageway 12 and the second gas outlet is provided at an outer end of a fourth gas passageway 13.

A butterfly valve assembly 20 is provided within the manifold 1 for selectively controlling the flow of gases from the first gas inlet 2 and first passageway 10 into either the first gas outlet 3 and second passageway 11, and hence through the charge air cooler, or into the second gas outlet 5 and passageway 13, and hence directly into the engine, bypassing the charge air cooler.

The butterfly valve assembly 20 comprises a cylindrical valve housing 22 located between the second passageway 11 and the fourth passageway 13, a circular flap 24 being pivotally mounted within the housing 22 for rotation about a central pivot axis 26 extending perpendicular to the axis of the cylindrical housing 22 between first and second operative positions, the peripheral edge of the flap 24 engaging the inner surface of the housing 22 in each of its operative positions.

A region 14 of the third passageway 12 defines a convergence between the third passageway 12, the valve housing 22 and the fourth passageway 13 to enable gas from either the valve housing 22 or the third passageway 12 to pass into the fourth passageway 14 and hence the second gas outlet 5.

The first passageway 10 intersects and opens into the cylindrical valve housing 22 in a direction normal to the axis of the cylindrical housing 22 and perpendicular to the pivot axis 26 of the flap 24. The relative dimensions of the housing 22, flap 24 and first passageway 10 are selected such that opening of the first passageway 10 into the cylindrical housing 22 falls within a boundary defined by the contact points of the peripheral edge of the flap 24 with the inner surface of the housing 22 in each of its operative positions.

The flap 24 of the valve assembly is mechanically connected to an output shaft of a rotary actuator 30, by means of suitable gearing and/or linkages, whereby the flap 24 can be moved between its respective operative positions.

The by-pass valve has two operative positions:
a) a first operative position (normal mode as shown in Fig. 2) wherein the hot air flow from the turbo-charger passes through the manifold via the first gas inlet 2, first passageway 10, through the valve housing and into the second passageway 11 and through the first gas outlet 3 to pass through the charge air cooler before being passed to the intake manifold of the engine via the second gas inlet 4, second passageway 12, third passageway 13 and through the second gas outlet 5;
b) a second operative position (particle filter regeneration - with the flap valve rotated substantially 90° in a counter-clockwise direction from its position shown in Fig. 2) wherein the hot air flow from the turbo charger is passed directly to the intake manifold of the engine via the first gas inlet 2, first passageway 10, valve housing 22, fourth passageway 13 and second gas outlet 5, bypassing the charge air cooler.

The actuator is advantageously arranged between the second and third passageways 11,12, the second 11, third 12 and fourth 12 passageways being substantially arranged in a "Y" configuration, to reduce the overall size of the bypass assembly.

Previous valves were using two independent actuators and two mechanisms. The novelty of this invention is to have only one valve and a single actuator.

The flow is directed either to the cooler inlet or directly to the gas outlet using one flap. The pressure/flow or gas through the valve does not influence the force/torque needed to actuate the mechanism. The sealing between the flap and the tube is guaranteed in both positions.

The pivot axis 26 of the flap 24 is positioned perpendicularly to the axis of the cylindrical valve housing 22. The axis 26 is centred on the flap 24. The first passageway 10 defines a second cylinder is intersecting the cylindrical valve housing 22 in a zone not interfering with the sealing surface of the housing 22 and the flap 24.

The flap 24 has a dual profile allowing the flap 24 to seal against the cylindrical housing 22 in both operative positions.

## Claims

1. A bypass assembly for a charge air cooler of an internal combustion engine comprising a body having a first gas inlet (2) passageway having an inlet for communication with a charge air outlet of a turbocharger or supercharger, a first gas outlet (3) passageway having an outlet for communication with an inlet of a charge air cooler, and a second gas outlet (5) passageway having an outlet for communication with an inlet manifold of the engine, a valve means (20) being mounted within the body,
**characterized in that** said valve means (20) is mounted at an intersection of said first gas inlet (2) passageway, said first gas outlet (3) passageway and said second gas outlet (5) passageway, said valve means (20) having a first configuration, enabling gas flow between said first gas inlet (2) passageway and said first gas outlet (3) passageway and preventing communication between said first gas inlet (2) passageway and said second gas outlet (5) passageway, and a second configuration enabling gas flow between said first gas inlet (2) passageway and said second gas outlet (5) passageway and preventing communication between said first gas inlet (2) passageway and said first gas outlet (3) passageway, actuator means (30) being provided for moving said valve means (20) between its first and second configurations.

2. The bypass assembly according to claim 1, **characterized in that** the body further comprises a second gas inlet (4) passageway having an inlet for communication with an outlet of a charge air cooler, said second gas inlet (4) passageway communicating with said second gas outlet (5) passageway.

3. The bypass assembly according to claim 1 or 2, **characterized in that** the valve means (20) comprises a valve member (24) pivotally mounted in a passage section (22) located between the first gas outlet (3) passageway and the second gas outlet (5) passageway, the valve member (24) having a pivot axis (26) arranged normal to the longitudinal axis of said passage section (22) such that peripheral edge regions of the valve member (24) are engageable against respective inner surfaces of the passage section (22) when in its first and second configurations.

4. The bypass assembly according to claim 3, **characterized in that** said first gas inlet (2) passageway intersects said passage section (22) in a direction substantially normal to the pivot axis (26) of the valve member (24) and at a location between said respective inner surfaces of the cylindrical region cooperating with said valve member (24) when in its respective first and second configuration.

5. The bypass assembly according to claim 3 or 4, **characterized in that** said first gas inlet (2) passageway extends perpendicular to said passage section (22) at least in the region of the valve means (20).

6. The bypass assembly according to anyone of claims 3 to 5, **characterized in that** said passage section (22) is substantially cylindrical and said valve member (24) comprises a substantially circular flap having a central diametrically extending pivot axis (26) extending radially through a centre of the passage section (22).
